# EUROPEAN PATENT SPECIFICATION

(11) **EP 3 216 769 B1**
(45) Date of publication and mention of the grant of the patent: **29.08.2018**
(21) Application number: 16158971.8
(22) Date of filing: 07.03.2016
(51) Int. Cl.: C03B 9/453, B66C 1/46

(54) **A HANDLING UNIT FOR HOLLOW GLASS ARTICLES**
EINHEIT ZUM HANDHABEN VON HOHLGLASWAREN
UNITÉ DE MANUTENTION D'ARTICLES EN VERRE CREUX

(43) Date of publication of application: 13.09.2017
(73) Proprietor: BDF Industries S.p.A., 36100 Vicenza (IT)
(72) Inventor: SASSO, Daniele, 36100 Vicenza (IT); TREVISIOL, Giuliano, 36100 Vicenza (IT)
(74) Representative: De Bonis, Paolo

(56) References cited:
- EP-A1- 1 772 436
- WO-A1-2005/100271
- DE-U1- 29 902 149

## Description

### Field of the invention

The present invention relates to handling units for hollow glass articles, particularly finger-type handling units.

More in detail, the present invention will be developed with reference to a handling unit including:
- a plurality of fingers, each configured to engage a corresponding hollow glass article in correspondence of a gripping area and for dragging said article along a connection trajectory between a gripping position and a release position,
- a displacement mechanism of said plurality of fingers between the gripping position and release position,
wherein each finger of said plurality includes a nozzle which can be supplied by means of pressurized air and arranged in correspondence of said gripping area, said nozzle being configured for ejecting air in a tangent direction with respect to said gripping area so as to set a depression in correspondence of said gripping area to fold a hollow glass article arranged in the gripping area itself. A handling unit of this type is known, e.g., from document WO 2005/100271 A1. Other documents of general interest in the field include, i.a., EP 1 772 436 A1 and DE 299 02 149 U1.

### Description of prior art and general technical problem

In the field of hollow glass articles forming machines wide use is made of handling units for hollow glass article of the finger type, that is including a plurality of fingers shaped to define a gripping area for hollow glass articles that have to be displaced along a connection trajectory between a gripping position and a release position (which correspond, for example, to the outlet of an upstream conveyor and to the inlet of a downstream conveyor arranged orthogonal or incident to one another).

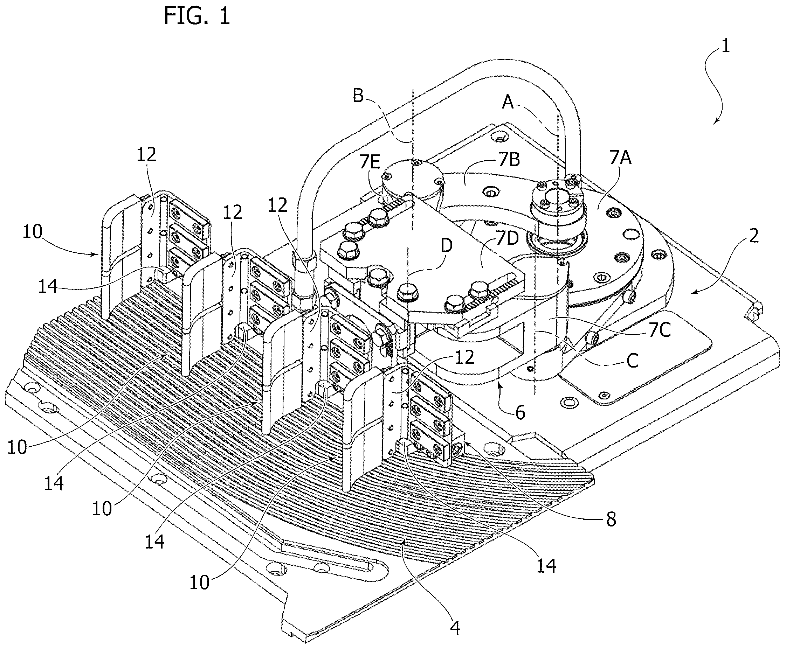

Although figure 1 illustrates a handling unit according to the invention, the general structure is shared with known devices, so that it may be used as a reference for a general description of such devices.

The handling unit 1 of figure 1 includes a turntable 2 and a gripping unit 4, which is configured to receive and drag the hollow glass articles from the gripping position to the release position. The displacement of the unit 4 is entrusted to a mechanism 6 installed on the turret 2 configured to drag the hollow glass articles along a curvilinear trajectory that connects the gripping and release positions.

In this embodiment the mechanism 6 is of the articulated pentha-lateral type and includes a first rocker 7A and a second rocker 7B rotatable around a first axis of rotation A fixed in space, and a first and a second rods 7C, 7E articulated to one another and with respect to the rockers 7A, 7B. The rod 7C is furthermore fixed to a header 7D to which a crosspiece 8 is connected which carries a plurality of fingers 10 of the gripping unit 4.

More in detail, the rocker 7B has a first end articulated with respect to the rocker 7A around the axis A, and a second end articulated to a first end of the rod 7E around a second axis of rotation B parallel to the axis A.

The rod 7C has a first end articulated to a free end of the rocker 7A in correspondence of a third axis of rotation C parallel to the axes A and B and has a second end (provided on a header 7D) articulated to the rod 7E in correspondence of a fourth axis of rotation D parallel to the axes A, B, C. The operation of such mechanism is per se known and will not be described further.

It will be enough to mention that the rockers 7A, 7B are operated in rotation around the axis A between the (angular) gripping and release positions and the complex of the rods of the mechanism 6 provides for the displacement of the complex of fingers 10 from one position to the other.

Each of the fingers 10 is made so as to define a gripping area for hollow glass articles which includes an angular element 12 on which a nozzle 14 is provided having a vertical axis (parallel to the axes A-D). Each nozzle 14 receives a pressurized air supply from a single pneumatic source and is configured for the ejection of air in a direction which is tangent with respect to the angular element 12 (that is in respect of the gripping area). In this way, a hollow glass article -for example a bottle- which during the movement from the gripping position to the release position abuts against the angular element 12 and against the finger 10 is held thanks to the depression created by the airflow sliding along the element 12, thereby countering the centrifugal action resulting from the movement itself.

The inventors have anyway observed that such a solution does not offer optimal performances in any condition of use, in so far as the ejection of air that is provided may result over -or under- dimensioned depending on the position of the hollow glass article (that is as a function of the finger 10 which is considered) with respect to the axis of rotation A.

As a consequence, some hollow glass articles may escape from gripping because the depression that is created is insufficient in respect of the centripetal acceleration that develops in correspondence of the respective finger in the disparate points of the connection trajectory described thereby, or it is excessive and drags the article over the correct release position.

### Object of the invention

The object of the present invention is to solve the aforementioned technical drawbacks. In particular, the object of the invention is to optimize the gripping of the hollow glass articles in a handling unit that uses a depression holding system for the articles.

### Summary of the invention

The object of the present invention is achieved by a handling unit for hollow glass articles having the features forming the subject of the appended claims, which form an integral part of the technical disclosure herein provided in relation to the invention.

In particular, the object of the invention is achieved by a handling unit having all the features listed at the beginning of the present description, and further characterized in that it includes at least two control units of the supply airflow of the nozzle, wherein each control unit of the airflow is configured to control at least one corresponding nozzle independently of the nozzles controlled by remaining control units of the airflow.

### Brief description of the figures

The invention will now be described with reference to the attached figures, provided purely by way of non limiting example, wherein:
- figure 1 shows a handling unit according to the invention,
- figures 2A, 2B, 2C, 2D show corresponding embodiments of control units of the supply airflow of the nozzles that equip a handling unit according to the invention,
- figures 3A, 3B, 3C, 3D correspond substantially to figures 2A-2D but show yet further embodiments.

### Detailed description of preferred embodiments

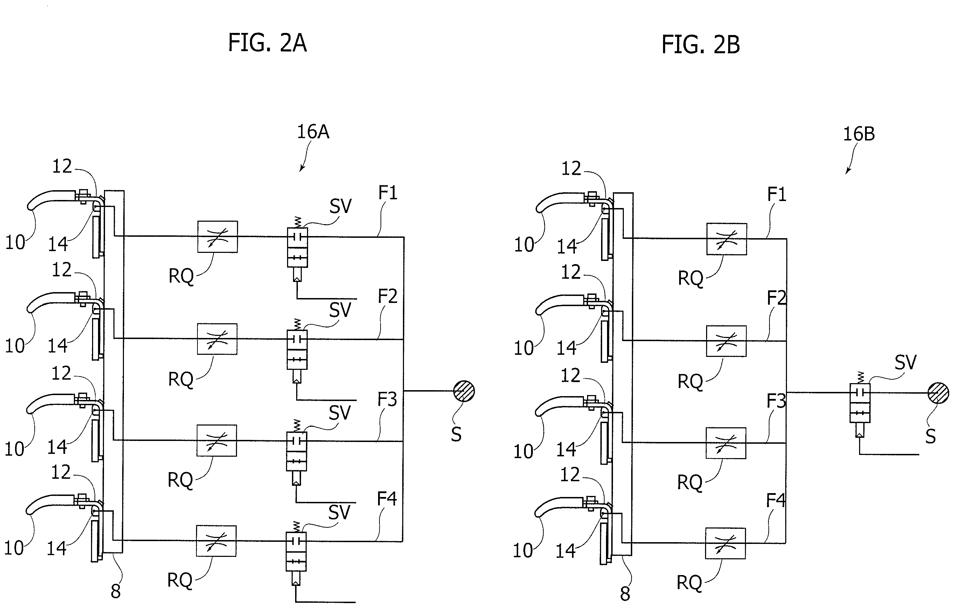

With reference to figures 2A-2D, various embodiments of the handling unit 1 according to the invention will now be described, particularly various embodiments of supply circuits of a nozzles 14.

With reference to figure 2A, reference number 16A designates as a whole a supply circuit of the nozzle 14 according to a first embodiment of the invention.

In particular, the circuit 16A includes control units of the supply airflow of the nozzles 14 in equal number with respect to the nozzles 14 themselves. In the case in point, without this constituting any limitation whatsoever, the circuit 16A includes four nozzles 14 and four control units of the airflow.

Each control unit includes, arranged in series to one another, a two-way flow regulator valve RQ, and a solenoid valve SV having two ways and two positions (open-closed) arranged upstream of the flow regulator valve RQ. Each series connection comprising the valve RQ and the solenoid valve SV is arranged on a supply line F1, F2, F3, F4 respectively, leading to a corresponding nozzle 14 and furthermore originating by branching off a circuit node that receives the supply from a pneumatic source S.

With reference to figure 2B, a second embodiment of the supply circuit is herein indicated by the reference 16B. Circuit 16B includes again a control unit of the airflow for each nozzle 14. However, differently from circuit 16A, each control unit of the airflow includes the sole valve RQ arranged on the corresponding supply line F1, F2, F3, and F4, respectively.

In such case, furthermore, the lines F1-F4 originate by branching off a circuit node that is arranged downstream of a single solenoid valve SV, upstream of which the pneumatic source S is located. Essentially, the solenoid valve SV that in the circuit 16A is associated to each single nozzle 14, is here in common to all the nozzles, being it arranged upstream of the bundle of flow regulation units. The fluid communication between the node from which the lines F1-F4 originate is thus controlled by means of the solenoid valve SV.

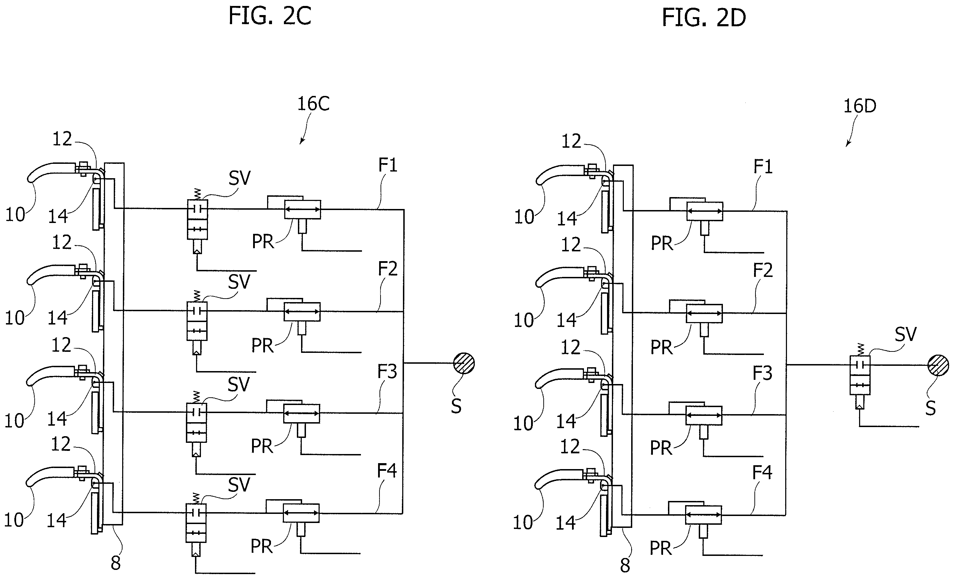

With reference to figure 2C, a third embodiment of the supply circuit of the airflow to the nozzles 14 is indicated by the reference 16C. The circuit 16C substantially similar to the circuit 16A, save for that in place of the flow regulator valves RQ pressure reducers PR are installed, preferably of the pneumatic driven type (downstream pressure) or electrically driven type, and in a position which is upstream of the corresponding solenoid valve SV (and not downstream as the valves RQ).

This means that on each line F1, F2, F3 and F4 a series arrangement is observed of a pressure reducer PR and a solenoid valve SV, the latter downstream of the reducer PR.

With reference to figure 2D, a fourth embodiment of the supply circuit of the airflow to the nozzles 14 is indicated by the reference 16D. The circuit 16D is similar to the circuit 16B, but again a replacement of the valves RQ with corresponding pressure reducers PR is provided.

The operation of the unit 1, and in particular of the respective circuit 16A-16D, is the following.

In case of the circuit 16A, each control unit allows to modulate the supply of air to the corresponding nozzle 14 by varying the flow thereof thanks to the valves RQ, and possibly opting for the exclusion thereof by way of the solenoid valves SV. Each control unit controls the corresponding nozzle completely independently of the control operated by the other units on the respective nozzles, albeit receiving airflow from the same source S.

Similar considerations apply in respect of the circuit 16C, wherein the airflow going to each nozzle 14, may be controlled independently by way of the pressure reducers PR (in such case the flow reduction will be depending on the calibration pressure of the reducer PR), and wherein it is possible to exclude one or more nozzles 14 independently by operating the corresponding solenoid valve SV.

In case of the circuits 16B and 16D, flow modulation takes place with the same modalities as the circuits 16A and 16C (respectively), that is, completely independently for each nozzle 14, but the exclusion of the nozzles 14 is only available in a centralized fashion by way of the valve SV, so that it is not possible to decide for the selective exclusion (which corresponds to the shutdown of the airflow).

The flow modulation criteria may be multiple, and in general they are based on the values of the centripetal acceleration acting on each hollow glass article engaged in a corresponding finger 10. The modulation is thus provided with the aim of creating flow conditions of the air from each nozzle 14 that result in a depression proportional to the entity of the centrifugal actions on the hollow glass article dragged by the corresponding finger 10.

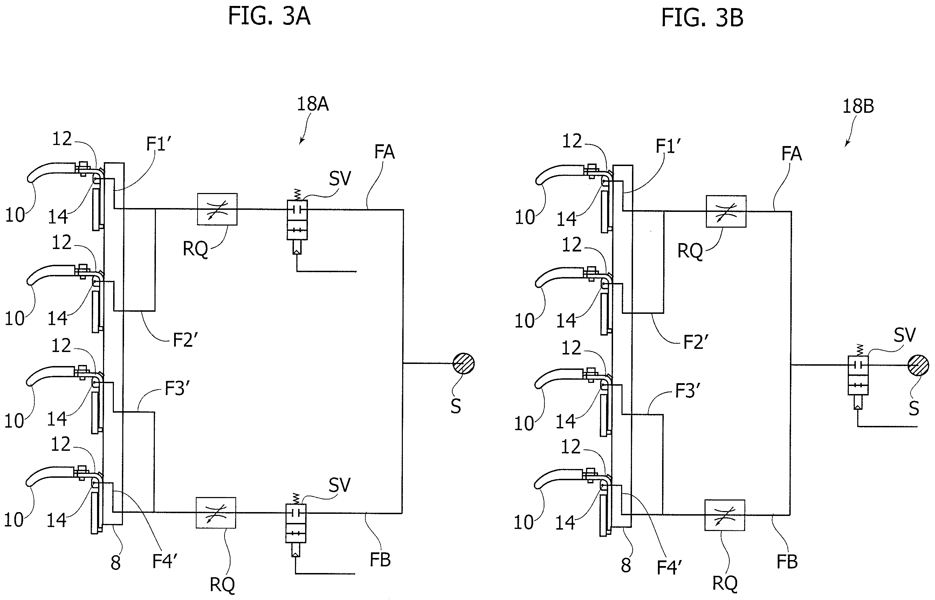

With reference to figures 3A-3D, further embodiments of the supply circuit of the airflow to the nozzles 14 will now be described by means of which it is possible to operate a different type of control of the nozzles 14.

The circuits of the figures 3A-3D are characterized all by having control units of the airflow that control pairs of nozzles 14.

With reference to figure 3A, a fifth embodiment of the supply circuit of the airflow is indicated by the reference 18A, and includes a first circuit branch FA and a second circuit branch FB, both branching off the source S in correspondence of the circuit node.

On each branch FA, FB the two-way flow regulator valve RQ and, upstream thereof, the solenoid valve SV are arranged, connected in series with one another.

Downstream of the valve RQ is located a further circuit node from which two supply lines (Fl', F2' for the branch FA and F3', F4' for the branch FB) branch off, each leading to a corresponding nozzle 14.

With reference to figure 3B, a sixth embodiment of the supply circuit of the airflow is indicated by the reference 18B. The circuit 18B differs from the circuit 18A in that the control units of the airflow on the branches FA and FB include the sole flow regulator valves RQ (one for each branch). For this reason, the node from which the lines F1' and F2', F3' and F4' branch off is located downstream of the flow regulator valve RQ of each unit.

Upstream of the circuit node from which the branches FA and FB branch off, a single solenoid valve SV is arranged, upstream of which the source S is located. The fluid communication between the nodes from which the branches FA and FB branch off is thus regulated by means of the solenoid valve SV.

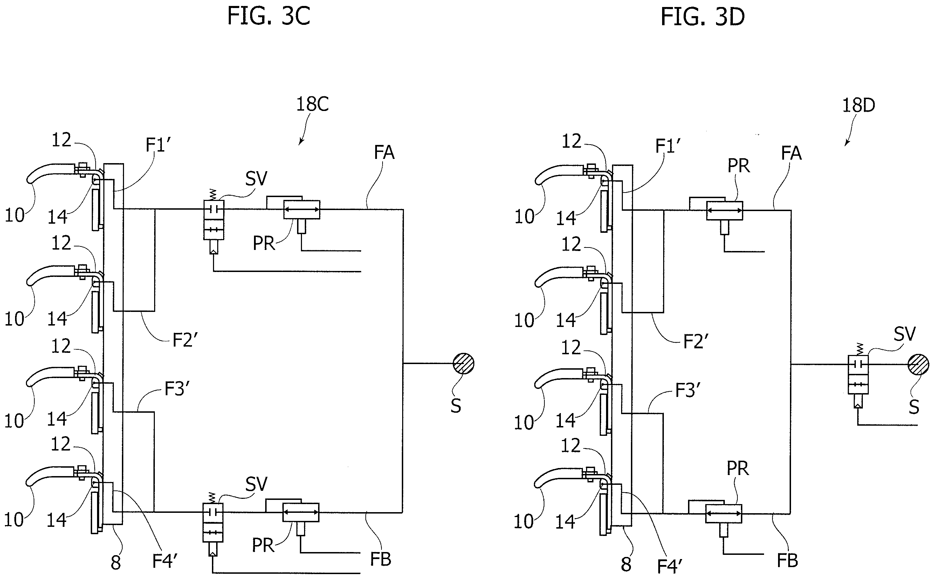

With reference to figure 3C, a seventh embodiment of the supply circuit of the airflow is indicated by the reference 18C. The circuit 18C is identical to the circuit 18A, save for the replacement of the flow regulator valves RQ with the pressure reducers PR.

Last, with reference to figure 3D, an eight embodiment of the supply circuit of the airflow is indicated by the reference 18D. The circuit 18D is identical to the circuit 18B, save for the replacement of the flow regulator valves RQ with the pressure reducers PR.

The operation of the unit 1 equipped with supply circuits 18A-18D is the following.

In each of the circuits 18A-18D the pairs of nozzles 14 supplied by the lines F1', F2' leading to the branch FA may be controlled independently of the pairs of nozzles 14 supplied by the lines F3', F4' leading to the branch FB. In particular, in case of the circuits 18A and 18C the airflow supplied to each pair of nozzles may be regulated independently from the other pair of nozzles (by way of the valves RQ or the reducers RP), and each pair may be excluded independently of the other pair by way of closure of the corresponding solenoid valve SV. It is not possible, however, the separate regulation of the nozzles 14 within each single pair.

Similar considerations apply as far as the units 1 equipped with a circuits 18B and 18D are concerned, with the sole difference lying in the fact that the exclusion of the nozzles 14 takes place in a centralized fashion by means of the switching of the solenoid valve SV upstream of the branches FA and FB in the closed position. It is not possible to separate the excluded pairs, while it remains available the possibility to control the flow independently for each pair of nozzles.

Following the same rationale, that is by placing the solenoid valves SV alternatively upstream or downstream of the bundle of supply lines, further operational combinations may be achieved, wherein, for example, a control unit for the airflow is associated to three nozzles 14 and a second control unit of the airflow is associated to a one and last nozzle 14.

Whatever the control combination chosen, the main advantage with respect to known devices consist in the possibility to regulate the airflow for the nozzles 14 as a function of the actual request dictated by the circumstances, in particular by the centripetal acceleration that rises during the rotary movement of the fingers 10 operated by the mechanism 6.

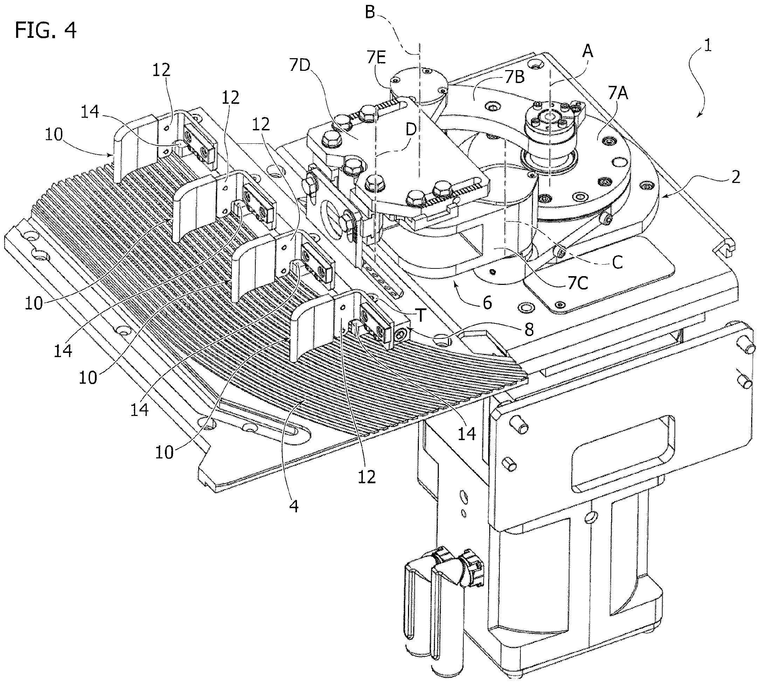

Furthermore, it should be observed how the circuits 16A-16D and 18A-18D may be provided both by way of external pipings, and by way of passageways provided directly inside the components constituting the unit 1. In this latter case (figure 4), the flow regulator valves or the pressure reducers RP may be coupled to or replaced by grub screw chokes T engaged into the crosspiece 8, particularly in positions intercepting flow channels leading to corresponding nozzles 14 (for example in positions corresponding to the lines F1-F4 or F1'-F4', or to the branches FA-FB provided into the crosspiece 8) thereby constituting themselves part of the control units of the supply airflow of the nozzles 14. The chokes T may be operated manually or by way of electrical or pneumatic actuators.

It will be anyway appreciated that, independently of the chosen combination, according to the invention at least two control units of the airflow are envisaged which control, each, at least one corresponding nozzle independently of the nozzles controlled by the remaining control units of the airflow. In this way, with reference to a handling unit having four fingers 10, control logics may be implemented having four independent nozzles (1-1-1-1), independent pairs of nozzles (2-2), or asymmetrical logics (3-1; 1-3), wherein three nozzles are controlled jointly and one nozzle is independently controlled.

Of course, the constructional details and the embodiments may be widely varied with respect to what described and shown herein without by this departing from the scope of protection of the present invention, as defined by the appended claims.

For example, embodiments are possible wherein on each line F1, F2, F3, F4 or on each branch FA, FB a control unit of the supply airflow of the nozzles 14 is installed consisting in a two way-two position solenoid valve (open position/closed position, similar to the valve SV) of the proportional type, by which it is possible to serve the functions of the valves RQ and SV (or PR and SV) in combination. In such case the embodiments of the circuits 2B, 2D and 3B, 3D may be deemed as not preferred in so far as the single proportional solenoid valves will be anyway capable of serving the function of exclusion of the corresponding nozzle(s).

## Claims

1. A handling unit (1) for hollow glass articles including:
- a plurality of fingers (10), each configured to engage a corresponding hollow glass article in correspondence of a gripping area (12) and to drag said article along a connection trajectory between a gripping position and a release position,
- a displacement mechanism (6, 7A, 7B, 7C, 7D, 7E) of said plurality of fingers (10) between the gripping position and the release position,
- wherein each finger (10) of said plurality includes a nozzle (14) which can be supplied by means of pressurized air and which is arranged in correspondence of said gripping area (12), said nozzle (14) being configured for the ejection of air in a direction tangent with respect to said gripping area (12) so as to set a depression in correspondence of said gripping area (12) to hold a hollow glass article arranged in the gripping area (12) itself,
the handling unit (1) being **characterized in that** it includes at least two control units (RQ, SV; PR, SVV; RQ; PR) of the supply airflow of the nozzles (14), wherein each control unit (RQ, SV; PR, SV; RQ; PR) of the airflow is configured to control at least one corresponding nozzle (14) independently of the nozzles (14) controlled by remaining control units (RQ, SV; PR, SV; RQ; PR) of the airflow.

2. The handling unit (1) according to claim 1, including one control unit of the airflow (RQ, SV; PR, SV; RQ; PR) for each nozzle (14).

3. The handling unit (1) according to claim 2, wherein each control unit of the airflow (RQ, SV) includes a series connection of a flow regulator valve (RQ) and a two ways-two positions solenoid valve (SV) arranged upstream of said flow regulator valve (RQ), wherein each series connection of said flow regulator valve (RQ) and a solenoid valve (SV) is provided on a corresponding supply line (F1, F2, F3, F4) leading to the corresponding nozzle (14) and originating by branching off a circuit node in fluid communication with a pneumatic source (S).

4. The handling unit (1) according to claim 2, wherein each control unit of the airflow (RQ) includes a flow regulator valve (RQ) arranged on a corresponding supply line (F1, F2, F3, F4) leading to the corresponding nozzle (14) and originating by branching off a circuit node in fluid communication with a pneumatic source (S), said fluid communication being regulated by means of a solenoid valve (SV) having two ways and two positions.

5. The handling unit (1) according to claim 2, wherein each control unit (PR, SV) of the airflow includes a series connection of a pressure reducer (PR) and a solenoid valve (SV) arranged downstream of said pressure reducer (PR), wherein each series connection of said pressure reducer (PR) and solenoid valve (SV) is provided on a corresponding supply line (F1, F2, F3, F4) leading to the corresponding nozzle (14) and originating by branching off a circuit node in fluid communication with a pneumatic source (S).

6. The handling unit (1) according to claim 2, wherein each control unit of the airflow (PR) includes a pressure reducer (PR) arranged on a corresponding supply line (F1, F2, F3, F4) leading to the corresponding nozzle (14) and originating by branching off a circuit node in fluid communication with a pneumatic source (S), said fluid communication being controlled by means of a solenoid valve (SV) having two ways and two positions.

7. A handling unit (1) according to claim 1, including a control unit of the airflow (RQ, SV; PR, SV; RQ; PR) for each pair of nozzles (14).

8. A handling unit (1) according to claim 7, wherein each control unit of the airflow (RQ, SV) includes a series connection between a flow regulator valve (RQ) and a solenoid valve having two ways and two positions (SV) arranged upstream thereof, wherein the series connection between said flow regulator valve (RQ) and solenoid valve (SV) is arranged on a circuit branch (FA, FB) originating by branching off a circuit node in fluid communication with a pneumatic source (S), wherein furthermore each circuit branch FA, FB leads to a further circuit node arranged downstream of said flow regulator valve (RQ) from which first and the second supply line (Fl', F2', F3', F4') leading to corresponding nozzles (14) of the pair originate by branching off therefrom.

9. The handling unit (1) according to claim 7, wherein each control unit of the airflow includes a flow regulator valve (RQ) arranged on a corresponding circuit branch (FA, FB) originating by branching off a circuit node in fluid communication with a pneumatic source (S), said fluid communication being regulated by means of a solenoid valve (SV) having two ways and two positions,
wherein furthermore each circuit branch (FA, FB) leads to a further circuit node arranged downstream of the flow regulator valve (RQ) from which a first and a second supply line (Fl', F2'; F3', F4') leading to corresponding nozzles (14) of the pair originate by branching off therefrom.

10. The handling unit (1) according to claim 7, wherein each control unit of the airflow (PR, SV) includes a series connection between a pressure reducer (PR) and a solenoid valve having two ways and two positions (SV), wherein the series connection of said pressure reducers (PR) and solenoid valve (SV) is arranged on a circuit branch (FA, FB) originating by branching off a circuit node in fluid communication with a pneumatic source (S), wherein furthermore each circuit branch (FA, FB) leads to a further circuit node arranged downstream of the solenoid valve (SV) from which a first and a second supply lines (Fl', F2'; F3', F4') leading to corresponding nozzles (14) of the pair originate by branching off therefrom.

11. The handling unit (1) according to claim 7, wherein each control unit of the airflow (PR) includes a pressure reducer (PR) arranged on a corresponding circuit branch (FA, FB) originating by branching off a circuit node in fluid communication with a pneumatic source (S) said fluid communication being controlled by means of a solenoid valve (SV) having two ways and two positions,
wherein furthermore each circuit branch (FA, FB) leads to a further circuit node arranged downstream of the pressure reducer (PR) from which a first and a second supply line (Fl', F2'; F3', F4') leading to a corresponding nozzles (14) of the pair originate by branching off therefrom.

12. The handling unit (1) according to any of claims 3 to 11, wherein said solenoid valve (SV) having two ways and two positions includes an open position and a closed position.

13. The handling unit (1) according to claim 2, wherein each control unit of the airflow includes a proportional solenoid valve having two ways and two positions arranged in a corresponding supply line (Fl', F2'; F3', F4') leading to the corresponding nozzle (14) and originating by branching off a circuit node in fluid communication with a pneumatic source (S), said proportional two ways and two positions solenoid valve includes an open position and a closed position.

14. The handling unit (1) according to claim 7, wherein each control unit of the airflow includes a proportional solenoid valve having two ways and two positions arranged in a corresponding circuit branch (FA, FB) originating by branching off a circuit node in fluid communication with a pneumatic source (S), said proportional solenoid valve having two ways and two positions including an open position and a closed position,
wherein furthermore each circuit branch (FA, FB) leads to a further circuit node arranged downstream of the flow regulator valve (RQ) from which a first and a second supply lines (Fl', F2'; F3', F4'), leading to corresponding nozzles (14) of the pair, originate by branching off therefrom.

15. A handling unit (1) according to any of the previous claims, wherein the nozzles (14) are supplied by means of flow channels provided into a crosspiece (8) carrying said fingers, and wherein the control units of the airflow includes grab screw chokes (T) engaged into said cross piece (8), particularly in positions intercepting flow channels (F1, F2, F3, F4; F1', F2', F3', F4'; FA, FB) leading to corresponding nozzles (14).

## Patentansprüche

1. Einheit zum Handhaben (1) von Hohlglaswaren, die Folgendes aufweist:
- eine Vielzahl von Fingern (10), die jeweils dazu eingerichtet sind, in Übereinstimmung mit einem Greifbereich (12) eine entsprechende Hohlglasware zu ergreifen und die Ware entlang einer Verbindungsbahn zwischen einer Greifposition und einer Löseposition zu ziehen,
- einen Verschiebungsmechanismus (6, 7A, 7B, 7C, 7D, 7E) der Vielzahl von Fingern (10) zwischen der Greifposition und der Löseposition,
- wobei jeder Finger (10) der Vielzahl eine Düse (14) aufweist, die mit Druckluft versorgt werden kann und die in Übereinstimmung mit dem Greifbereich (12) angeordnet ist, wobei die Düse (14) für den Ausstoß von Luft in einer tangential zum Greifbereich (12) verlaufenden Richtung dazu eingerichtet ist, einen Unterdruck in Übereinstimmung mit dem Greifbereich (12) einzustellen, um eine im Greifbereich (12) selbst angeordnete Hohlglasware zu halten,
wobei die Einheit zum Handhaben (1) **dadurch gekennzeichnet ist, dass** sie mindestens zwei Steuereinheiten (RQ, SV; PR, SVV; RQ; PR) des Versorgungsluftstroms der Düsen (14) aufweist, wobei jede Steuereinheit (RQ, SV; PR, SV; RQ; PR) des Luftstroms dazu eingerichtet ist, mindestens eine entsprechende Düse (14) unabhängig von den Düsen (14) zu steuern, die von den übrigen Steuereinheiten (RQ, SV; PR, SV; RQ; PR) des Luftstroms gesteuert werden.

2. Einheit zum Handhaben (1) nach Anspruch 1, die eine Steuereinheit des Luftstroms (RQ, SV; PR, SV; RQ; PR) für jede Düse (14) aufweist.

3. Einheit zum Handhaben (1) nach Anspruch 2, wobei jede Steuereinheit des Luftstroms (RQ, SV) eine Reihenschaltung eines Strömungsregelventils (RQ) und eines dem Strömungsregelventil (RQ) vorgeschaltet angeordneten Zweiweg-Zweipositions-Magnetventils (SV) aufweist, wobei jede Reihenschaltung des Strömungsregelventils (RQ) und eines Magnetventils (SV) an einer entsprechenden Versorgungsleitung (F1, F2, F3, F4) bereitgestellt ist, die zur entsprechenden Düse (14) führt und von einem Schaltungsknoten in Fluidverbindung mit einer Pneumatikquelle (S) abzweigt.

4. Einheit zum Handhaben (1) nach Anspruch 2, wobei jede Steuereinheit des Luftstroms (RQ) ein Strömungsregelventil (RQ) aufweist, das an einer entsprechenden Versorgungsleitung (F1, F2, F3, F4) angeordnet ist, die zur entsprechenden Düse (14) führt und von einem Schaltungsknoten in Fluidverbindung mit einer Pneumatikquelle (S) abzweigt, wobei die Fluidverbindung mithilfe eines Magnetventils (SV) mit zwei Wegen und zwei Positionen gesteuert wird.

5. Einheit zum Handhaben (1) nach Anspruch 2, wobei jede Steuereinheit (PR, SV) des Luftstroms eine Reihenschaltung eines Druckminderers (PR) und eines dem Druckminderer (PR) nachgeschaltet angeordneten Magnetventils (SV) aufweist, wobei jede Reihenschaltung des Druckminderers (PR) und des Magnetventils (SV) an einer entsprechenden Versorgungsleitung (F1, F2, F3, F4) bereitgestellt ist, die zur entsprechenden Düse (14) führt und von einem Schaltungsknoten in Fluidverbindung mit einer Pneumatikquelle (S) abzweigt.

6. Einheit zum Handhaben (1) nach Anspruch 2, wobei jede Steuereinheit des Luftstroms (PR) einen Druckminderer (PR) aufweist, der an einer entsprechenden Versorgungsleitung (F1, F2, F3, F4) angeordnet ist, die zur entsprechenden Düse (14) führt und von einem Schaltungsknoten in Fluidverbindung mit einer Pneumatikquelle (S) abzweigt, wobei die Fluidverbindung mithilfe eines Magnetventils (SV) mit zwei Wegen und zwei Positionen gesteuert wird.

7. Einheit zum Handhaben (1) nach Anspruch 1, die eine Steuereinheit des Luftstroms (RQ, SV; PR, SV; RQ; PR) für jedes Paar Düsen (14) aufweist.

8. Einheit zum Handhaben (1) nach Anspruch 7,
wobei jede Steuereinheit des Luftstroms (RQ, SV) eine Reihenschaltung eines Strömungsregelventils (RQ) und eines diesem vorgeschaltet angeordneten Magnetventils mit zwei Wegen und zwei Positionen (SV) aufweist, wobei die Reihenschaltung des Strömungsregelventils (RQ) und des Magnetventils (SV) an einem Schaltungszweig (FA, FB) angeordnet ist, der von einem Schaltungsknoten in Fluidverbindung mit einer Pneumatikquelle (S) abzweigt, wobei ferner jeder Schaltungszweig FA, FB zu einem weiteren, dem Strömungsregelventil (RQ) nachgeschaltet angeordneten Schaltungsknoten führt, von dem eine erste und eine zweite Versorgungsleitung (Fl', F2', F3', F4') abzweigen, die zu entsprechenden Düsen (14) des Paares führen.

9. Einheit zum Handhaben (1) nach Anspruch 7,
wobei jede Steuereinheit des Luftstroms ein Strömungsregelventil (RQ) aufweist, das an einem entsprechenden Schaltungszweig (FA, FB) angeordnet ist, der von einem Schaltungsknoten in Fluidverbindung mit einer Pneumatikquelle (S) abzweigt, wobei die Fluidverbindung mithilfe eines Magnetventils (SV) mit zwei Wegen und zwei Positionen geregelt wird,
wobei ferner jeder Schaltungszweig (FA, FB) zu einem weiteren, dem Strömungsregelventil (RQ) nachgeschaltet angeordneten Schaltungsknoten führt, von dem eine erste und eine zweite Versorgungsleitung (Fl', F2'; F3', F4') abzweigen, die zu entsprechenden Düsen (14) des Paares führen.

10. Einheit zum Handhaben (1) nach Anspruch 7, wobei jede Steuereinheit des Luftstroms (PR, SV) eine Reihenschaltung eines Druckminderers (PR) und eines diesem vorgeschaltet angeordneten Magnetventils mit zwei Wegen und zwei Positionen (SV) aufweist, wobei die Reihenschaltung des Druckminderers (PR) und des Magnetventils (SV) an einem Schaltungszweig (FA, FB) angeordnet ist, der von einem Schaltungsknoten in Fluidverbindung mit einer Pneumatikquelle (S) abzweigt, wobei ferner jeder Schaltungszweig (FA, FB) zu einem weiteren, dem Magnetventil (SV) nachgeschaltet angeordneten Schaltungsknoten führt, von dem eine erste und eine zweite Versorgungsleitung (Fl', F2'; F3', F4') abzweigen, die zu entsprechenden Düsen (14) des Paares führen.

11. Einheit zum Handhaben (1) nach Anspruch 7, wobei jede Steuereinheit des Luftstroms (PR) einen Druckminderer (PR) aufweist, der an einem entsprechenden Schaltungszweig (FA, FB) angeordnet ist, der von einem Schaltungsknoten in Fluidverbindung mit einer Pneumatikquelle (S) abzweigt, wobei die Fluidverbindung mithilfe eines Magnetventils (SV) mit zwei Wegen und zwei Positionen gesteuert wird,
wobei ferner jeder Schaltungszweig (FA, FB) zu einem weiteren, dem Druckminderer (PR) nachgeschaltet angeordneten Schaltungsknoten führt, von dem eine erste und eine zweite Versorgungsleitung (Fl', F2'; F3', F4') abzweigen, die zu entsprechenden Düsen (14) des Paares führen.

12. Einheit zum Handhaben (1) nach einem der Ansprüche 3 bis 11, wobei das Magnetventil (SV) mit zwei Wegen und zwei Positionen eine offene Position und eine geschlossene Position aufweist.

13. Einheit zum Handhaben (1) nach Anspruch 2,
wobei jede Steuereinheit des Luftstroms ein Proportionalmagnetventil mit zwei Wegen und zwei Positionen aufweist, das in einer entsprechenden Versorgungsleitung (Fl', F2'; F3', F4') angeordnet ist, die zur entsprechenden Düse (14) führt und von einem Schaltungsknoten in Fluidverbindung mit einer Pneumatikquelle (S) abzweigt, wobei das Zweiweg-Zweipositions-Proportionalmagnetventil eine offene und eine geschlossene Position aufweist.

14. Einheit zum Handhaben (1) nach Anspruch 7, wobei jede Steuereinheit des Luftstroms ein Proportionalmagnetventil mit zwei Wegen und zwei Positionen aufweist, das in einem entsprechenden Schaltungszweig (FA, FB) angeordnet ist, der von einem Schaltungsknoten in Fluidverbindung mit einer Pneumatikquelle (S) abzweigt, wobei das Proportionalmagnetventil mit zwei Wegen und zwei Positionen eine offene Position und eine geschlossene Position aufweist,
wobei ferner jeder Schaltungszweig (FA, FB) zu einem weiteren, dem Strömungsregelventil (RQ) nachgeschaltet angeordneten Schaltungsknoten führt, von dem eine erste und eine zweite Versorgungsleitung (Fl', F2'; F3', F4') abzweigen, die zu entsprechenden Düsen (14) des Paares führen.

15. Einheit zum Handhaben (1) nach einem der vorhergehenden Ansprüche, wobei die Düsen (14) durch Strömungskanäle versorgt werden, die in einem die Finger tragenden Kreuzstück (8) bereitgestellt sind, und wobei die Steuereinheiten des Luftstroms Drosseln mit Griffschraube (T) aufweisen, die mit dem Kreuzstück (8) in Eingriff stehen, insbesondere an Positionen, die die Strömungskanäle (F1, F2, F3, F4; F1', F2', F3', F4'; FA, FB) schneiden, die zu den entsprechenden Düsen (14) führen.

## Revendications

1. Unité de manutention (1) pour des articles en verre creux comportant :
- une pluralité de doigts (10), configurés chacun pour s'engager avec un article en verre creux correspondant en correspondance avec une zone de préhension (12) et pour traîner ledit article le long d'une trajectoire de liaison entre une position de préhension et une position de libération,
- un mécanisme de déplacement (6, 7A, 7B, 7C, 7D, 7E) de ladite pluralité de doigts (10) entre la position de préhension et la position de libération,
- où chaque doigt (10) de ladite pluralité comporte une buse (14) qui peut être alimentée en air sous pression et qui est agencée en correspondance avec ladite zone de préhension (12), ladite buse (14) étant configurée pour l'éjection d'air dans une direction tangente à ladite zone de préhension (12) de manière à établir une dépression en correspondance avec ladite zone de préhension (12) pour maintenir un article en verre creux agencé dans la zone de préhension (12) elle-même,
l'unité de manutention (1) étant **caractérisée en ce qu'**elle comporte au moins deux unités de commande (RQ, SV ; PR, SW ; RQ ; PR) du débit d'air d'alimentation des buses (14), où chaque unité de commande (RQ, SV ; PR, SV ; RQ ; PR) du débit d'air est configurée pour commander au moins une buse correspondante (14) indépendamment des buses (14) commandées par les unités de commande restantes (RQ, SV ; PR, SV ; RQ ; PR) du débit d'air.

2. Unité de manutention (1) selon la revendication 1, comportant une unité de commande de débit d'air (RQ, SV ; PR, SV ; RQ ; PR) pour chaque buse (14).

3. Unité de manutention (1) selon la revendication 2, dans laquelle chaque unité de commande du débit d'air (RQ, SV) comporte une liaison série d'une soupape de régulation de débit (RQ) et d'une électrovanne à deux voies et deux positions (SV) agencée en amont de ladite soupape de régulation de débit (RQ), où chaque liaison série de ladite soupape de régulation de débit (RQ) et d'une électrovanne (SV) est prévue sur une conduite d'alimentation correspondante (F1, F2, F3, F4) menant à la buse correspondante (14) et provenant de la bifurcation d'un noeud de circuit en communication fluidique avec une source pneumatique (S).

4. Unité de manutention (1) selon la revendication 2, dans laquelle chaque unité de commande du débit d'air (RQ) comporte une soupape de régulation de débit (RQ) agencée sur une conduite d'alimentation correspondante (F1, F2, F3, F4) menant à la buse correspondante (14) et provenant de la bifurcation d'un noeud de circuit en communication fluidique avec une source pneumatique (S), ladite communication fluidique étant régulée au moyen d'une électrovanne (SV) ayant deux voies et deux positions.

5. Unité de manutention (1) selon la revendication 2, dans laquelle chaque unité de commande (PR, SV) du débit d'air comporte une liaison série d'un détendeur (PR) et d'une électrovanne (SV) agencée en aval dudit détendeur (PR), où chaque liaison série dudit détendeur (PR) et de ladite électrovanne (SV) est prévue sur une conduite d'alimentation correspondante (F1, F2, F3, F4) menant à la buse correspondante (14) et provenant de la bifurcation d'un noeud de circuit en communication fluidique avec une source pneumatique (S).

6. Unité de manutention (1) selon la revendication 2, dans laquelle chaque unité de commande du débit d'air (PR) comporte un détendeur (PR) agencé sur une conduite d'alimentation correspondante (F1, F2, F3, F4) menant à la buse correspondante (14) et provenant de la bifurcation d'un noeud de circuit en communication fluidique avec une source pneumatique (S), ladite communication fluidique étant régulée au moyen d'une électrovanne (SV) ayant deux voies et deux positions.

7. Unité de manutention (1) selon la revendication 1, comportant une unité de commande du débit d'air (RQ, SV ; PR, SV ; RQ ; PR) pour chaque paire de buses (14).

8. Unité de manutention (1) selon la revendication 7, dans laquelle chaque unité de commande du débit d'air (RQ, SV) comporte une liaison série entre une soupape de régulation de débit (RQ) et une électrovanne ayant deux voies et deux positions (SV) agencée en amont de celle-ci, où la liaison série entre ladite soupape de régulation de débit (RQ) et ladite électrovanne (SV) est agencée sur une branche de circuit (FA, FB) provenant de la bifurcation d'un noeud de circuit en communication fluidique avec une source pneumatique (S), où en outre chaque branche de circuit FA, FB mène à un noeud de circuit supplémentaire agencé en aval de ladite soupape de régulation de débit (RQ) à partir duquel les première et deuxième conduites d'alimentation (F1', F2', F3', F4') menant aux buses correspondantes (14) de la paire proviennent de la bifurcation de celui-ci.

9. Unité de manutention (1) selon la revendication 7, dans laquelle chaque unité de commande du débit d'air comporte une soupape de régulation de débit (RQ) agencée sur une branche de circuit correspondante (FA, FB) provenant de la bifurcation d'un noeud de circuit en communication fluidique avec une source pneumatique (S), ladite communication fluidique étant régulée au moyen d'une électrovanne (SV) ayant deux voies et deux positions,
où en outre chaque branche de circuit (FA, FB) mène à noeud de circuit supplémentaire agencé en aval de la soupape de régulation de débit (RQ) à partir duquel des première et deuxième conduites d'alimentation (F1', F2' ; F3', F4') menant aux buses correspondantes (14) de la paire proviennent de la bifurcation de celui-ci.

10. Unité de manutention (1) selon la revendication 7, dans laquelle chaque unité de commande du débit d'air (PR, SV) comporte une liaison série entre un détendeur (PR) et une électrovanne ayant deux voies et deux positions (SV), où la liaison série desdits détendeurs (PR) et électrovanne (SV) est agencée sur une branche de circuit (FA, FB) provenant de la bifurcation d'un noeud de circuit en communication fluidique avec une source pneumatique (S), où en outre chaque branche de circuit (FA, FB) mène à un noeud de circuit supplémentaire agencé en aval de l'électrovanne (SV), à partir duquel des première et deuxième conduites d'alimentation (F1', F2' ; F3', F4') menant aux buses correspondantes (14) de la paire proviennent de la bifurcation de celui-ci.

11. Unité de manutention (1) selon la revendication 7, dans laquelle chaque unité de commande du débit d'air (PR) comporte un détendeur (PR) agencé sur une branche de circuit correspondante (FA, FB) provenant de la bifurcation d'un noeud de circuit en communication fluidique avec une source pneumatique (S), ladite communication fluidique étant commandée au moyen d'une électrovanne (SV) ayant deux voies et deux positions,
où en outre chaque branche de circuit (FA, FB) mène à un noeud de circuit supplémentaire agencé en aval du détendeur (PR) à partir duquel des première et deuxième conduites d'alimentation (F1', F2' ; F3', F4') menant à des buses correspondantes (14) de la paire proviennent de la bifurcation de celui-ci.

12. Unité de manutention (1) selon l'une des revendications 3 à 11, dans laquelle ladite électrovanne (SV) ayant deux voies et deux positions comporte une position ouverte et une position fermée.

13. Unité de manutention (1) selon la revendication 2, dans laquelle chaque unité de commande du débit d'air comporte une électrovanne proportionnelle ayant deux voies et deux positions, agencée dans une conduite d'alimentation correspondante (F1', F2' ; F3', F4') menant aux buses correspondantes (14) et provenant de la bifurcation d'un noeud de circuit en communication fluidique avec une source pneumatique (S), ladite électrovanne proportionnelle à deux voies et deux positions comporte une position ouverte et une position fermée.

14. Unité de manutention (1) selon la revendication 7, dans laquelle chaque unité de commande du débit d'air comporte une électrovanne proportionnelle ayant deux voies et deux positions, agencée dans une branche de circuit correspondante (FA, FB) provenant de la bifurcation d'un noeud de circuit en communication fluidique avec une source pneumatique (S), ladite électrovanne proportionnelle ayant deux voies et deux positions comporte une position ouverte et une position fermée,
où en outre chaque branche de circuit (FA, FB) mène à un noeud de circuit supplémentaire agencé en aval de la soupape de régulation de débit (RQ) à partir duquel des première et deuxième conduites d'alimentation (F1', F2' ; F3', F4'), menant aux buses correspondantes (14) de la paire, proviennent de la bifurcation de celui-ci.

15. Unité de manutention (1) selon l'une des revendications précédentes, dans laquelle les buses (14) sont alimentées au moyen de canaux d'écoulement prévus dans une traverse (8) portant lesdits doigts, et dans laquelle les unités de commande du débit d'air comportent des étrangleurs à vis sans tête (T) engagés dans ladite traverse (8), en particulier dans des positions interceptant des canaux d'écoulement (F1, F2, F3, F4 ; F1', F2', F3', F4' ; FA, FB) menant aux buses correspondantes (14).
